# EUROPEAN PATENT SPECIFICATION

(11) **EP 3 808 169 B1**
(45) Date of publication and mention of the grant of the patent: **17.04.2024**
(21) Application number: 20201129.2
(22) Date of filing: 09.10.2020
(51) Int. Cl.: A01G 13/02, A01G 17/06, E04H 17/10

(54) **A PILE-COVERING HOOD**
KAPPE FÜR WEINBERGPFAHL
CHAPEAU POUR POTEAU HORTICOLE

(30) Priority: 14.10.2019 IT 201900018746
(43) Date of publication of application: 21.04.2021
(73) Proprietor: Valente S.R.L., 35011 Campodarsego (PD) (IT)
(72) Inventor: VALENTE, Alessandro, 35011 Campodarsego (PD) (IT)
(74) Representative: Trentin, Michele

(56) References cited:
- EP-A1- 2 353 370
- CN-U- 206 707 403

## Description

### Field of application

The present invention is applicable to the agricultural sector and in particular to crop equipment.

In more detail, the present invention relates to crop covers.

### State of the art

In the agricultural sector there is often a need to provide crop cover systems to protect the crops from atmospheric agents.

The structure of such covers comprises a series of poles connected together by steel wires and ropes, held in tension by special anchors fixed in the ground, on which protective nets and sheets are installed, in order to substantially form a roof to protect the crop.

To allow a proper fixing of wires and ropes of the structure and to protect the nets and sheets from possible damage caused by the rough surfaces of the poles, generally in concrete, caps are inserted on the top of the latter.

These pole-cover caps are press-fitted onto the upper ends of the poles to which they adhere, thus avoiding loosening. In some instances, as a precaution, it is provided to insert an additional screw tightening to permanently secure the cap to the pole.

The most well-known type of pole-cover caps comprise grooves for the passage of wires and ropes, and a series of locking elements adapted to couple the components of the cover to the structure.

Typically, the locking elements consist of a set of screw elements, metal or plastic washers, and nuts, which are generally coupled to a threaded screw associated with the cap.

However, this fixing system is complex, as the number of screw elements necessary to secure the longitudinal wires, the transverse ropes and the net to the cap is very high.

To reduce the number of elements required for the locking, the plastic washers used in the known devices can be co-moulded with metal elements.

However, the decrease in the elements in use due to the co-moulding of the washers is not such as to lead to a significant simplification of the assembly of the cover.

In particular, the installation of the cover structure would be simplified if the ridge wire (longitudinal wire) were initially only partially fixed to the pole-cover cap, and following the installation of all the components of the cover, the wire could be tensioned and permanently fixed to the cap.

However, this procedure is not applicable using the pole-cover caps described heretofore.

Usually, therefore, the ridge wire is completely locked to the pole-cover cap, and following the completion of the installation of the cover, the locking elements are loosened to allow the tensioning of the wire and the consequent definitive locking.

However, the loosening of the locking elements after installation entails a large burden in terms of time and operational complexity. Moreover, the other components of the cover may lose their optimal arrangement.

Alternatively, the ridge wire can only be attached to the pole-cover cap when all the cover components have been assembled. However, following this installation procedure problems arise related to the stability of the cover during installation.

According to the state of the art, pole-cover caps are also known which comprise a snap plug which is inserted into the shaped body. Such plug creates a pressure on the ridge wire so as to lock it during the installation of the structure.

However, the use of a snap mechanism makes the removal of the plug very difficult, thus complicating any replacement of the cover elements.

In addition, a cap provided with a snap plug does not allow an adjustable pressure to be exerted on the ridge wire. Consequently, it is not possible to partially fix the wire to the cap to allow the installation of the entire structure and only then put the wire in tension and thus definitively lock it.

The pole-cover caps described in patent documents EP2353370 A1 and CN 206707403 U are also known, which have a fixing system which provides for screwing on a threaded screw.

However, the aforementioned documents do not overcome the drawbacks mentioned above; in fact, the screw fixing described is complex and does not allow the adjustment of the pressure on the ridge wire.

### Presentation of the invention

The object of the present invention is to provide a pole-cover cap according to claim 1 which allows at least partially overcoming the drawbacks highlighted above.

In particular, an object of the present invention is to provide a pole-cover cap which can ensure an adequate fixing of the components of a crop cover (wires, ropes, nets and sheets) to a pole structure.

A further object of the present invention is to provide a pole-cover cap in which the fixing of the cover elements to the structure is simplified with respect to the locking systems present in the prior art.

In particular, an object of the present invention is to provide a pole-cover cap which allows a partial fixing of the ridge wire during the installation of the structure.

A further object of the present invention is to provide a pole-cover cap in which the fixing elements allow an adjustable pressure to be exerted on the ridge wire.

Another object of the present invention is to provide a pole-cover cap in which the locking system is easily reversible, so as to be able to unlock the cover elements when necessary.

Said objects, as well as others which will become clearer below, are achieved by a pole-cover cap according to the following claims, which are to be considered an integral part of the present patent.

In particular, the pole-cover cap of the invention, which can be associated with the head of cover poles, comprises a hollow body and a fixing assembly of a cover.

According to an aspect of the invention, such fixing assembly comprises a plurality of locking elements coupled to each other and each dedicated to the fixing to the pole-cover cap of corresponding components of the cover. In particular, among such locking elements is comprised a first locking element capable of fixing a ridge wire to the cap, i.e., the wire which longitudinally joins the poles.

According to another aspect of the invention, the shaped body comprises at least one groove to allow the passage of the aforementioned ridge wire on the pole-cover cap.

According to a further aspect of the invention, the shaped body comprises a recess obtained at the top thereof and intersecting the aforementioned groove. Such recess is shaped to accommodate therein at least a portion of the first locking element so that the latter compresses the ridge wire on the recess.

According to another aspect of the invention, the side surface of the first locking element has a first shaping and the corresponding inner surface of the recess has a second shaping. Furthermore, such shapings are obtained so as to allow the coupling of the first locking element in the recess by rotation.

Advantageously, the pole-cover cap of the invention thus allows to ensure an adequate fixing of the cover components to the structure.

Still advantageously, the coupling between the first locking element and the shaped body of the cap is such as to simplify the fixing operations with respect to the known systems.

In fact, the coupling between the first locking element and the shaped body occurs by rotation. Advantageously, this allows to adjust the pressure exerted by the first locking element on the ridge wire, depending on the rotation angle impressed.

Furthermore, still advantageously, said coupling by rotation allows a partial fixing of the ridge wire to the pole-cover cap. This allows to install all the components of the cover without incurring structural problems and then correctly tension the ridge wire before definitively fixing it to the cap.

Still advantageously, the coupling by rotation operation is easily reversible, allowing to meet the need to decouple the first locking element from the pole-cover cap.

From what has been stated above, it is evident that the objects described are also achieved by a crop cover according to claim 8 comprising:
- at least a plurality of support poles;
- a plurality of cover components among which there is at least one ridge wire;
- a plurality of pole-cover caps according to the above and each associated with a respective pole for coupling the cover components thereto.

### Brief description of the drawings

Further features and advantages of the invention will become more evident in light of the detailed description of a preferred but not exclusive embodiment of a pole-cover cap according to the invention, illustrated by way of non-limiting example with the aid of the accompanying drawings, in which:
FIG. 1 shows an axonometric exploded view of a pole-cover cap according to the invention;

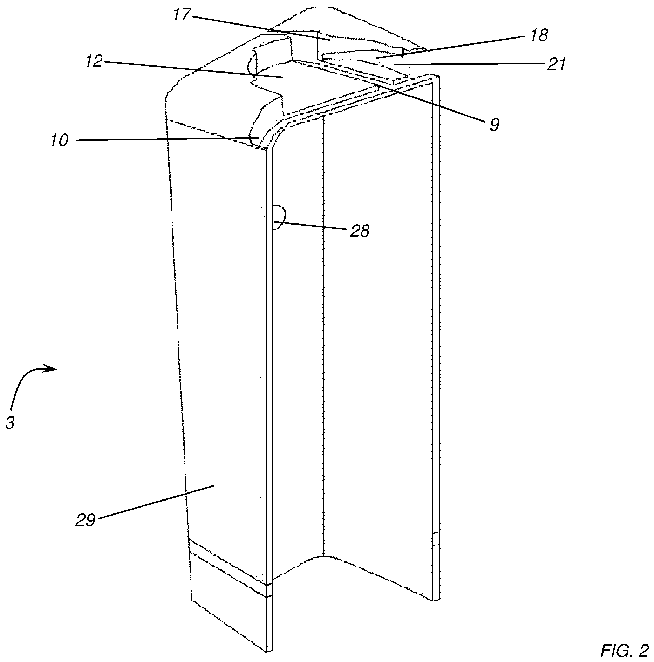

FIG. 2 represents a detail of the pole-cover cap of FIG. 1 in a sectional view.

### Detailed description of some preferred embodiments

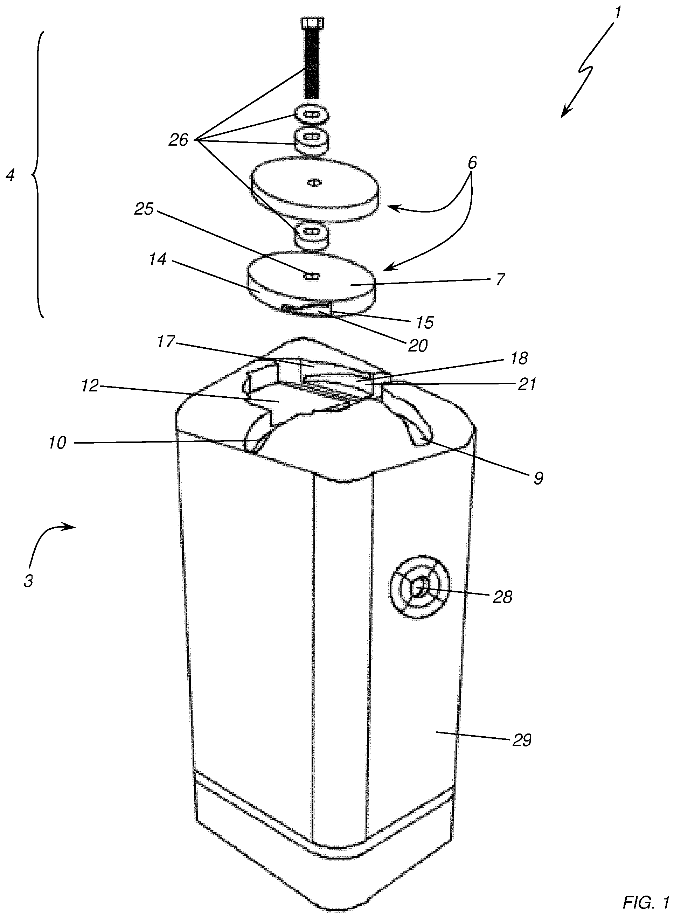

With reference to the above mentioned figures, and in particular to FIG. 1, a pole-cover cap **1** is described which can be associated with the head of crop cover support poles. It comprises a hollow body **3** adapted to accommodate the head of the respective pole in the cavity thereof. It further comprises a fixing assembly **4** of the cover.

According to an aspect of the invention, the fixing assembly **4** comprises a plurality of locking elements **6** coupled to each other and each of them dedicated to fixing corresponding components of the cover. Such locking elements **6** are typically, but not necessarily, screw elements such as washers, nuts and screws. The components of the cover, on the other hand, are generally wires, ropes (longitudinal and transverse to the structure of the cover), protective nets and/or sheets.

In aspects not falling under the scope of the invention, each locking element is dedicated to fixing multiple components of the cover or where multiple locking elements are necessary to fix a single component.

According to an aspect of the invention, between the locking elements **6** of the cap **1** there is a first locking element **7** capable of fixing a ridge wire to the pole-cover cap **1.**

According to the described embodiment, the first locking element **7** is a washer. Obviously, such aspect should not be considered limiting for different embodiments of the first locking element.

According to another aspect of the invention, the shaped body **3** comprises at the top thereof a groove **9** for the passage of the ridge wire on the cap **1.**

Furthermore, in the embodiment of the invention which is described, such shaped body **3** comprises an additional groove **10** for the passage of ropes transverse to the ridge wire. Obviously, the shaped body may comprise multiple grooves or only one.

According to a further aspect of the invention, the shaped body **3** also comprises a recess **12,** obtained at the top thereof, intersecting the grooves **9** and **10** and shaped to accommodate therein a portion of the first locking element **7** so as to compress the ridge wire in the recess **12** itself.

In particular, the side surface **14** of the first locking element **7** has a first shaping **15** and the corresponding inner surface **17** of the recess **12** has a second shaping **18** shaped to couple with the first shaping **15.** More specifically, the shapings **15** and **18** are such as to allow the mutual coupling thereof by rotation of the first locking element **7** in the recess **12,** and consequently, to couple the first locking element **7** to the cap **1.**

Advantageously, the pole-cover cap **1** of the invention thus allows to ensure an adequate fixing of the cover components to the structure.

In particular, the coupling by rotation of the first locking element **7** to the shaped body **3** advantageously allows to simplify the operations of fixing the ridge wire to the poles with respect to the known systems.

Still advantageously, the same coupling by rotation allows the pressure exerted on the ridge wire to be adjusted. In fact, depending on the rotation angle impressed by the operator during the installation of the first locking element **7,** a more or less intense pressure is exerted on the ridge wire.

Still advantageously, the possibility of adjusting the pressure exerted on the ridge wire allows to obtain a partial fixing of the wire to the cap **1** of the invention. Consequently, the pole-cover cap **1** of the invention allows to first install the cover with a first tensioning of the ridge wire and without incurring structural problems. At the end of the installation of all the components, the cap **1** of the invention allows to proceed with the definitive tensioning and fixing of the ridge wire without in any way affecting the other components of the cover.

Still advantageously, the coupling between the first locking element **7** and the shaped body **3** is easily reversible, simplifying any disassembly of the cover.

According to the embodiment described, the first shaping **15** comprises a substantially wedge-shaped protrusion **20,** while the second shaping **18** comprises a substantially counter-wedge-shaped groove **21** adapted to accommodate the wedge-shaped protrusion **20.**

Obviously, the manufacture of the first and the second shaping is a feature which should not be understood in a limiting sense for the present invention. In particular, an alternative embodiment is not excluded where the second shaping comprises a substantially wedge-shaped protrusion and the first shaping comprises a substantially counter-wedge-shaped groove adapted to accommodate such protrusion.

Further, according to a different embodiment variant not shown in the figures, the first shaping comprises a first thread while the second shaping comprises a second thread counter-shaped on the first to allow the screwing of the first locking element in the recess.

According to the invention, the two shapings are such as to allow a bayonet-type engagement of the first locking element in the recess.

According to another aspect of the invention, the first locking element **7** has a through hole **25** to allow the passage of a junction group **26** of the other locking elements **6** forming the fixing assembly **4.**

Advantageously, the presence of a through hole **25** allows an independent coupling of the other locking elements **6** with respect to the first element **7.**

Obviously, this aspect should not be considered limiting for different embodiments where the other locking elements are coupled to the cap by means of a plurality of junction groups.

According to the described embodiment of the invention, the shaped body **3** comprises a hole **28** on the side surface **29** thereof shaped to be struck by a fixing screw (not represented herein) of the pole-cover cap **1** to the pole head.

Advantageously, the use of a fixing screw allows a more stable coupling of the cap **1** to the top of the poles. In other embodiments, the coupling is interlocking or where there are multiple holes to accommodate multiple fixing screws.

From what has been said it is evident that the object of the invention is also a crop cover comprising:
- at least a plurality of support poles;
- a plurality of cover components among which there is at least one ridge wire;
- a plurality of pole-cover caps according to the above and each associated with a respective pole for coupling the cover components thereto.

A complete description of the crop cover of the invention is omitted here, since it would replicate what is already written about the same during the description of the pole-cover cap **1.** What is observed is that it achieves all the aforementioned advantages.

In light of the foregoing, it is understood that the pole-cover cap of the invention achieves all the intended objects.

In particular, the pole-cover cap of the invention allows an adequate fixing of the components of a crop cover to a pole structure.

Furthermore, the cap of the invention allows for a simplified fixing with respect to the locking systems present in the prior art.

In fact, the pole-cover cap of the invention allows a partial fixing of the ridge wire during the assembly of the cover. On closer inspection, however, the fixing elements of the invention allow an adjustable pressure to be exerted on the ridge wire, further simplifying the aforementioned assembly.

Finally, the locking system of the ridge wire to the cap of the invention is easily reversible.

The invention is defined by the appended claims. In embodiments not covered by the claims all the details and steps may furthermore be replaced by other technically equivalent elements, and the materials may be different depending on the needs.

## Claims

1. A pole-cover cap, which can be associated with the head of crop cover support poles, comprising a shaped hollow body (**3**) and a fixing assembly (**4**) of a cover, said fixing assembly (**4**) comprising a plurality of locking elements (**6**) coupled to each other and each dedicated to fixing corresponding components of the cover, among said locking elements (**6**) being comprised a first locking element (**7**) capable of fixing a ridge wire to said pole-cover cap (**1**), said shaped body (**3**) comprises:
- at least one groove (**9**) obtained on the top of said shaped body (**3**) for the passage of the ridge wire;
- at least one recess (**12**) obtained on the top of said shaped body (**3**), intersecting said groove (**9**) and shaped to accommodate therein at least a portion of said first locking element (**7**) so as to compress the ridge wire in said recess (**12**),
the side surface (**14**) of said first locking element (**7**) having a first shaping (**15**) and the corresponding inner surface (**17**) of said recess (**12**) having a second shaping (**18**) such as to allow the mutual coupling thereof by rotation of said first locking element (**7**) in said recess (**12**),
**characterized in that** said first and second shapes are shaped so as to allow a bayonet-type engagement of said first locking element (**7**) in said recess (**12**).

2. A pole-cover cap according to claim 1, **characterized in that** said first shaping (**15**) comprises a substantially wedge-shaped protrusion (**20**) and said second shaping (**18**) comprises a substantially counter-wedge-shaped groove (**21**) adapted to accommodate said wedge-shaped protrusion (**20**).

3. A pole-cover cap according to claim 1, **characterized in that** said second shaping comprises a substantially wedge-shaped protrusion and said first shaping comprises a substantially counter-wedge-shaped groove adapted to accommodate said wedge-shaped protrusion.

4. A pole-cover cap according to claim 1, **characterized in that** said first shaping comprises a first thread and said second shaping comprises a second counter-shaped thread on said first thread.

5. A pole-cover cap according to any one of the previous claims, **characterized in that** said first locking element (**7**) has a through hole (**25**) to allow the passage of a junction group (**26**) of one or more of said locking elements (**6**) composing said fixing assembly (**4**).

6. A pole-cover cap according to any one of the previous claims, **characterized in that** said first locking element (**7**) is a washer.

7. A pole-cover cap according to any one of the previous claims, **characterized in that** said shaped body (**3**) comprises at least one hole (**28**) on the side surface (**29**) thereof shaped to be struck by a fixing screw of said pole-cover cap (**1**) to the pole head.

8. A crop cover comprising:
- at least a plurality of support poles;
- a plurality of cover components among which there is at least one ridge wire;
- a plurality of pole-cover caps (**1**) according to one or more of the previous claims, each associated with one respective of said poles to couple said cover components to said poles.

## Patentansprüche

1. Pfahlabdeckkappe, die mit dem Kopf von Kulturabdeckungs-Stützpfählen verbunden werden kann, umfassend einen Formhohlkörper (3) und eine Befestigungsanordnung (4) einer Abdeckung, wobei die Befestigungsanordnung (4) mehrere Verriegelungselemente (6) umfasst, die miteinander gekoppelt sind und jeweils zum Befestigen entsprechender Komponenten der Abdeckung bestimmt sind, wobei die Verriegelungselemente (6) ein erstes Verriegelungselement (7) umfassen, das in der Lage ist, einen Firstdraht an der Pfahlabdeckkappe (1) zu befestigen, wobei der Formkörper (3) umfasst:
- mindestens eine Nut (9), die zum Hindurchführen des Firstdrahtes an dem oberen Ende des Formkörpers (3) bereitgestellt ist;
- mindestens eine Ausnehmung (12), die an dem oberen Ende des Formkörpers (3) bereitgestellt ist, die Nut (9) kreuzt und geformt ist, um darin mindestens einen Abschnitt des ersten Verriegelungselements (7) aufzunehmen, um so den Firstdraht in der Ausnehmung (12) zusammenzudrücken,
wobei die Seitenoberfläche (14) des ersten Verriegelungselements (7) eine erste Ausformung (15) und die entsprechende innere Oberfläche (17) der Ausnehmung (12) eine zweite Ausformung (18) aufweist, um auf diese Weise deren Koppeln miteinander durch Drehung des ersten Verriegelungselements (7) in der Ausnehmung (12) zu ermöglichen,
**dadurch gekennzeichnet, dass** die erste und die zweite Ausformung derart geformt sind, dass sie einen bajonettartigen Eingriff des ersten Verriegelungselements (7) in der Ausnehmung (12) ermöglichen.

2. Pfahlabdeckkappe nach Anspruch 1, **dadurch gekennzeichnet, dass** die erste Ausformung (15) einen im Wesentlichen keilförmigen Vorsprung (20) umfasst und die zweite Ausformung (18) eine im Wesentlichen gegenkeilförmige Rille (21) umfasst, die dazu ausgebildet ist, den keilförmigen Vorsprung (20) aufzunehmen.

3. Pfahlabdeckkappe nach Anspruch 1, **dadurch gekennzeichnet, dass** die zweite Ausformung einen im Wesentlichen keilförmigen Vorsprung umfasst und die erste Ausformung eine im Wesentlichen gegenkeilförmige Rille umfasst, die dazu ausgebildet ist, den keilförmigen Vorsprung aufzunehmen.

4. Pfahlabdeckkappe nach Anspruch 1, **dadurch gekennzeichnet, dass** die erste Ausformung ein erstes Gewinde umfasst und die zweite Ausformung ein zu dem ersten Gewinde gegenläufig geformtes zweites Gewinde umfasst.

5. Pfahlabdeckkappe nach einem beliebigen der vorhergehenden Ansprüche, **dadurch gekennzeichnet, dass** das erste Verriegelungselement (7) ein Durchgangsloch (25) aufweist, um das Hindurchführen einer Verbindungsgruppe (26) aus einem oder mehreren der Verriegelungselemente (6), aus welchen sich die Befestigungsanordnung (4) zusammensetzt, zu ermöglichen.

6. Pfahlabdeckkappe nach einem beliebigen der vorhergehenden Ansprüche, **dadurch gekennzeichnet, dass** das erste Verriegelungselement (7) eine Unterlegscheibe ist.

7. Pfahlabdeckkappe nach einem beliebigen der vorhergehenden Ansprüche, **dadurch gekennzeichnet, dass** der Formkörper (3) an seiner Seitenoberfläche (29) mindestens ein Loch (28) umfasst, das geformt ist, um durch eine Befestigungsschraube der Pfahlabdeckkappe (1) an dem Pfahlkopf durchdrungen zu werden.

8. Kulturabdeckung, umfassend:
- mindestens mehrere Stützpfähle;
- mehrere Abdeckungskomponenten, unter denen sich mindestens ein Firstdraht befindet;
- mehrere Pfahlabdeckkappen (1) nach einem oder mehreren der vorhergehenden Ansprüche, die jeweils mit einem entsprechenden der Pfähle verbunden sind, um die Abdeckungskomponenten mit den Pfählen zu koppeln.

## Revendications

1. Capuchon de couverture de poteau, qui peut être associé à la tête de poteaux de support de couverture de culture, comprenant un corps creux profilé (**3**) et un ensemble de fixation (**4**) d'une couverture, ledit ensemble de fixation (4) comprenant une pluralité d'éléments de verrouillage (**6**) couplés les uns aux autres et dédiés chacun à la fixation des composants correspondants de la couverture, parmi lesdits éléments de verrouillage (6), étant compris un premier élément de verrouillage (**7**) capable de fixer un fil de faîtage audit capuchon de couverture de poteau (**1**), ledit corps profilé (**3**) comprend :
- au moins une rainure (9) obtenue sur le dessus dudit corps profilé (3) pour le passage du fil de faîtage ;
- au moins un évidement (**12**) obtenu sur le dessus dudit corps profilé (**3**), coupant ladite rainure (**9**) et étant formé pour y loger au moins une partie dudit premier élément de verrouillage (**7**) de manière à comprimer le fil de faîtage dans ledit évidement (**12**),
la surface latérale (**14**) dudit premier élément de verrouillage (**7**) présentant une première mise en forme forme (**15**) et la surface intérieure correspondante (**17**) dudit évidement (**12**) présentant une seconde mise en forme (**18**) de manière à permettre leur couplage mutuel par rotation dudit premier élément de verrouillage (**7**) dans ledit évidement (**12**),
**caractérisé en ce que** lesdites première et seconde formes sont façonnées de manière à permettre un engagement de type à baïonnette dudit premier élément de verrouillage (**7**) dans ledit évidement (**12**).

2. Capuchon de couverture de poteau selon la revendication 1, **caractérisé en ce que** ladite première mise en forme (**15**) comprend une saillie sensiblement en forme de coin (**20**) et ladite seconde mise en forme (**18**) comprend une rainure sensiblement en forme de contre-coin (**21**) adaptée pour accueillir ladite saillie en forme de coin (**20**).

3. Capuchon de couverture de poteau selon la revendication 1, **caractérisé en ce que** ladite seconde mise en forme comprend une saillie sensiblement en forme de coin et ladite première mise en forme comprend une rainure sensiblement en forme de contre-coin adaptée pour recevoir ladite saillie en forme de coin.

4. Capuchon de couverture de poteau selon la revendication 1, **caractérisé en ce que** ladite première mise en forme comprend un premier fil et que ladite seconde mise en forme comprend un second fil en forme de contre-fil sur ledit premier fil.

5. Capuchon de couverture de poteau selon l'une quelconque des revendications précédentes, **caractérisé en ce que** ledit premier élément de verrouillage (**7**) présente un trou traversant (**25**) pour permettre le passage d'un groupe de jonction (**26**) d'un ou plusieurs desdits éléments de verrouillage (**6**) composant ledit ensemble de fixation (**4**).

6. Capuchon de couverture de poteau selon l'une quelconque des revendications précédentes, **caractérisé en ce que** ledit premier élément de verrouillage (**7**) est une rondelle.

7. Capuchon de couverture de poteau selon l'une quelconque des revendications précédentes, **caractérisé en ce que** ledit corps profilé (**3**) comprend au moins un trou (**28**) sur sa surface latérale (**29**) façonné pour être frappé par une vis de fixation dudit capuchon de couverture de poteau (**1**) sur la tête du poteau.

8. Couverture végétale comprenant :
- au moins une pluralité de poteaux de support ;
- une pluralité de composants de couverture parmi lesquels se trouve au moins un fil de faîtage ;
- une pluralité de capuchons de couverture de poteau (**1**) selon l'une ou plusieurs des revendications précédentes, chacun étant associé à l'un desdits poteaux respectifs pour coupler lesdits composants de couverture auxdits poteaux.
